# EUROPÄISCHE PATENTSCHRIFT

(11) **EP 3 566 868 B1**
(45) Veröffentlichungstag und Bekanntmachung des Hinweises auf die Patenterteilung: **23.06.2021**
(21) Anmeldenummer: 19172993.8
(22) Anmeldetag: 07.05.2019
(51) Int. Cl.: B33Y 10/00, B33Y 70/00, C03B 19/06, C03B 19/12

(54) **VERFAHREN ZUM DREIDIMENSIONALEN ADDITIVEN AUFBAU EINES FORMKÖRPERS AUS WASSERGLAS**
METHOD FOR THREE-DIMENSIONAL ADDITIVE MANUFACTURING OF A WATER GLASS ARTICLE
PROCÉDÉ DE FABRICATION ADDITIVE TRIDIMENSIONNELLE D'UN OBJET EN VERRE SOLUBLE

(30) Priorität: 08.05.2018 DE 102018111014
(43) Veröffentlichungstag der Anmeldung: 13.11.2019
(73) Patentinhaber: Ernst-Abbe-Hochschule Jena, 07745 Jena (DE)
(72) Erfinder: BLIEDTNER, Prof. Dr. Jens, 07745 Jena (DE); GÖTZE, Dr. Kerstin, 07751 Jena (DE); BARZ, Dr. Andrea, 07745 Jena (DE); SCHWAGER, Anne-Marie, 07745 Jena (DE)
(74) Vertreter: Schaller, Renate

(56) Entgegenhaltungen:
- FR-A1- 3 056 577

## Beschreibung

Bauteile aus amorphen silikatischen Materialien werden bisher meist formgebunden und maschinell in größeren Stückzahlen gefertigt. Sie werden vorrangig aus einer Glasschmelze mittels Blas- und Pressverfahren gefertigt, oder Flachglas wird definiert umgeformt, z. B. durch Tiefziehen. Anwendungsbereiche sind hierfür in der konventionellen glasverarbeitenden Herstellung, z. B. in der Behälterglasherstellung oder Flachglasverarbeitung zu finden. Ähnliches gilt für die Fertigung von Bauelementen aus kristallinen silikatischen Werkstoffen. Im Gegensatz zu glasigen Formkörpern werden zur Formgebung kristalliner silikatischer Bauteile vorwiegend Gieß-, Press- und Sinterverfahren eingesetzt, wobei pulverförmiges kristallines Ausgangsmaterial in Abhängigkeit vom Verfahren mit verschiedenen flüssigen oder festen Hilfsstoffen vermischt wird.

Die Herstellung von kleinen Stückzahlen oder Einzelstücken silikatischer Bauteile erfolgt unabhängig vom Ausgangswerkstoff auch heute noch vorwiegend manuell. Glasige Formkörper werden dabei meist durch einen Glasbläser gefertigt oder mittels SOL-Gel-Verfahren, ein Gießverfahren auf der Basis von Tetraethylorthosilikat (TEOS), hergestellt. Für kristalline Bauteile werden auch in der Einzelfertigung ähnliche Verfahren genutzt wie für die Serie.

Verglichen mit 3D-Druckverfahren sind die genannten Verfahren kaum individualisierbar, da sie immer an ein Formwerkzeug gebunden sind. Hohlräume, Hinterschnitte, Bohrungen u. ä. sind aufgrund der Gießform kaum möglich.

Um kleinere Stückzahlen bis hin zum einzelnen Prototyp individualisiert fertigen zu können, bieten die noch jungen additiven Verfahren, häufig auch als 3D-Druck bezeichnet, ein großes Zukunftspotenzial. Sie erlauben prinzipiell auch die Generierung von komplexen dreidimensionalen Bauteilen, z. B. Körper mit Hinterschneidungen und Innenkonturen, die mit herkömmlichen Verfahren nicht realisierbar sind. Für die Verarbeitung von Metallen und Kunststoffen sind die additiven Verfahren bereits bis zur Industriereife entwickelt worden und werden teilweise auch schon zur industriellen Fertigung eingesetzt. Für silikatische Materialien, insbesondere Gläser, gibt es aktuell noch keine industrietauglichen Lösungen. Dies begründet sich einerseits aus der Schwierigkeit, diese Materialien spannungsarm additiv zu verarbeiten, und andererseits durch die hohen Kosten für die Ausgangsmaterialien. So werden beispielsweise für den Einsatz von Glaspulvern für das selektive Lasersintern Materialkosten von ca. 500€/kg erforderlich.

Bisherige Lösungen zum additiven Herstellen von dreidimensionalen Körpern aus glasigen silikatischen Werkstoffen basieren auf dem Einsatz von Pulvern oder stabförmigen Materialien, welche in verschiedener Weise aufgeschmolzen bzw. verschmolzen werden [Luo, Junjie: Additive manufacturing of glass using a filament fed process. Dissertation, Missouri University of Science and Technology, Mechanicaland Aerospace Engineering, 2017]. Des Weiteren ist für großvolumige Bauteile ein Verfahren bekannt, bei dem der Aufbau mit geschmolzenem Glas über eine Düse erfolgt [Klein, John et al: Additive Manufacturing of Optically Transparent Glass. In: 3D Printing an Additive Manufacturing Vol. 2 Nr. 3 (2015), S. 92-105]. Eine andere additive Methode ist der Druck mittels sogenannter Glastinte, eine Suspension aus pyrogener Kieselsäure und Tetraethylenglycoldimethylether, an den sich ein Trocknungs- und Ausbrennprozess sowie ein Sinterprozess anschließen [Nguyen, Du T et al: 3D-Printed Transparent Glass. In: Advanced Materials 2017, 1701181]. Neben den technischen Problemen, wie Inhomogenitäten, schlechten Bauteilgenauigkeiten bzw. Konturtreue und Anisotropie, sind die zum Einsatz kommenden Materialien durch sehr hohe Materialpreise gekennzeichnet, die den Einsatz für industrielle Lösungen sehr stark hemmen bzw. unmöglich machen.

Zur Herstellung additiv aufgebauter Formkörper mit kristalliner Struktur wird ebenfalls pulvriges Ausgangsmaterial verwendet. Dieses wird entweder im gesamten Volumen (Dispersion) oder partiell mit einem organischen Binder (meist UV-aushärtendes Polymer) oder mit einem anorganischen Bindemittel (meist Wasserglas) versetzt. Das Polymer verklebt die Pulverpartikel oder wird mit Strahlung definierter Wellenlänge verfestigt [Melcher, R.: Rapid Prototyping von Keramiken durch 3D-Drucken. Dissertation, Friedrich-Alexander-Universität Erlangen-Nürnberg (FAU), Technische Fakultät, 2009], [Seitz, H. et al: Three-dimensional printing of porous ceramic scaf folds forbone tissue engineering. In: J. Biomedical Material Research Vol. 74b (2005), S. 782-88]. Das Wasserglas wird chemisch z. B. durch Reaktion mit sauren Gasen wie CO₂ und koagulierenden Substanzen wie Aluminiumphosphaten oder thermisch durch Wasserentzug ausgehärtet [DE 10 2014 004 692 A1, DE 10 2011 105 688 A1, DE 10 2012 020 000 A1, WO 2016/091249 A1]. In weiteren Prozessschritten muss das Bindemittel wieder entfernt werden, wodurch die Formkörper eine hohe Porosität aufweisen. Dies erfordert einen nachträglichen Sinterprozess verbunden mit einer hohen Schwindung. Es treten ähnliche technische Probleme auf wie bei den Verfahren zur additiven Fertigung von glasigen Bauteilen, und die Ausgangsmaterialien sind ebenfalls sehr kostenintensiv.

Aus der Offenlegungsschrift FR 3 056 577 A1 ist ein Verfahren zum dreidimensionalen additiven Aufbau eines Formkörpers bekannt, bei dem ein Ausgangsmaterial nacheinander schichtweise in einem Bauprozess verfestigt wird. Als Ausgangsmaterial werden Gemische aus einer Silikatmatrix und einem reaktiven Additiv angegeben, die vor der Verarbeitung gemischt bzw. extrudiert werden. Die Silikatmatrix kann aus Wasser, Siliziumdioxid und Kaliumhydroxid zusammengesetzt sein und unterschiedliche, über die Temperatur und das Mischungsverhältnis eingestellte Viskositäten aufweisen. Durch Einstellung einer entsprechenden Viskosität können die Objekte mittels eines Abscheideverfahrens in einem additiven Verfahren schichtweise aufgebaut werden. Jede Schicht wird vor dem Auftragen der nächsten Schicht verfestigt. Die Verfestigung einer Schicht kann beispielsweise durch Verdampfung der Lösungsmittel durch Tempern bei Temperaturen < 200°C erfolgen.

Zu den silikatischen Materialien gehört Wasserglas. Wasserglas ist keine definierte chemische Verbindung, sondern eine Sammelbezeichnung für glasig erstarrte Schmelzen und wässrige Lösungen von Alkalisilikaten der Zusammensetzung Me₂O·nSiO₂ mit Me = Natrium, Kalium oder auch Lithium. Wassergläser werden in großen Mengen vorwiegend in der Bauchemie eingesetzt, wodurch sie sehr preisgünstig für einen Preis von weniger als 10€/kg zu beziehen sind. Der Werkstoff Wasserglas wird aktuell vorwiegend in Form von Anstrichen und Infiltrationslösungen zum Abdichten von Mauerwerk in Bauwerken und sogar Kernkraftwerken (Fukushima) eingesetzt. Die Anwendungen liegen hier folglich in einer zweidimensionalen Verarbeitung. Eingesetzt werden die Wassergläser auch zur Synthese von Kieselgelen und Kieselsolen. Da Kaliumwasserglas keine sodabedingten Kristalle bildet, wird es oftmals als Bindemittel für Farbpigmente verwendet. Natriumwasserglas hingegen wird zum Flammenschutz von Holz, als Entfettungs-, Wasch- und Reinigungsmittel und als Bindemittel in der Gießereiindustrie verwendet.

Eine weitere Anwendung von Wasserglas ist der Einsatz als Bindemittel zur Fertigung von Kernen für Formen in Gießereien. Dafür wird es mit Formgrundstoffen, i. d. R. Quarzsanden, vermischt und durch eine chemisch-physikalische Reaktion mittels Kohlendioxid ausgehärtet. Ebenfalls wurde die Verwendung von Natriumwasserglas als anorganisches Bindemittel für den 3D-Druck von anorganischen Formen und Kernen für die Gießtechnik untersucht. Hierzu wird sprühgetrocknetes feindispergiertes Natriumwasserglas (≤ 1 µm) als Binder dem Formgrundstoff (Quarzsand) hinzugefügt. Durch eine Druckdüse wird destilliertes Wasser selektiv auf die Bauplattform gebracht. Die entstehende Wasserglaslösung benetzt die Quarzsandkörner. Durch das Einbringen von Infrarotstrahlung wird das Wasserglas getrocknet und die Binderbrücken werden gefestigt.

Lithiumwasserglas hingegen wird insbesondere zur Oberflächenbehandlung von Beton, als Schweißzusatz und als Keramikglasur verwendet. Durch den hohen Lithiumgehalt ergeben sich ein höherer Schmelzpunkt sowie eine bessere Adhäsion an anderen Materialien. Im Vergleich zu Natrium- und Kaliumwasserglas weist Lithiumwasserglaslösung eine stabile niedrige Viskosität bei einem hohen MolVerhältnis und das nach der Trocknung entstandene Carbonat eine geringere Löslichkeit auf.

Es ist die Aufgabe der Erfindung, ein neues kostengünstiges additives Verfahren zur Generierung komplexer dreidimensionaler amorpher, teilkristalliner oder kristalliner Formkörper zu schaffen.

Diese Aufgabe wird für ein Verfahren zum dreidimensionalen additiven Aufbau eines Formkörpers, bei dem ein Ausgangsmaterial nacheinander in einem Bauprozess schichtweise verfestigt wird, wobei die dabei entstehenden Schichten jeweils eine vorgegebene Querschnittsgeometrie aufweisen, dadurch gelöst, dass als Ausgangsmaterial flüssiges oder pastöses Wasserglas verwendet wird und die Verfestigung der Schichten durch Lösungsmittelentzug über die Eintragung einer Energiestrahlung erfolgt.

Es ist von Vorteil, wenn die Energiestrahlung eine Infrarot-Strahlung ist, die statisch zu einer Oberfläche des flüssigen Wasserglases bzw. einer Oberfläche der zuletzt aufgetragenen Schicht des pastösen Wasserglases ausgerichtet wird und mit einem Strahlungsquerschnitt pro herzustellender Schicht auf die jeweilige Oberfläche projiziert wird, der jeweils der Querschnittsgeometrie der jeweiligen Schicht des herzustellenden Formkörpers entspricht.

Vorteilhaft ist die Energiestrahlung eine fokussierte Energiestrahlung, die auf oder unter die jeweilige Oberfläche fokussiert wird, und die jeweilige Querschnittsgeometrie der jeweiligen Schichten wird mit der fokussierten Energiestrahlung gescannt.

Vorzugsweise ist die fokussierte Energiestrahlung eine Infrarot- oder Ultraviolett-Strahlung.

Vorteilhaft werden die jeweiligen Schichten durch die fokussierte Energiestrahlung mehrfach gescannt.

Es ist von Vorteil, wenn das Ausgangsmaterial flüssiges Wasserglas ist und der Aufbau des Formkörpers auf einer Plattform erfolgt, die in einem Behälter angeordnet ist, der mit dem flüssigen Wasserglas gefüllt ist, und die Plattform schichtweise gegenüber einer Oberfläche des flüssigen Wasserglases abgesenkt wird, wobei zum Lösungsmittelentzug einer ersten Schicht die Plattform mit einem ersten Abstand zur Oberfläche des flüssigen Wasserglases positioniert wird und zum Lösungsmittelentzug der jeweils weiteren Schichten jeweils nach einem Schritt des Absenkens der Plattform die jeweils zuvor verfestigte Schicht in einem weiteren Abstand zu der Oberfläche des flüssigen Wasserglases angeordnet wird, wobei sich aus den jeweiligen Abständen für die jeweiligen Schichten entsprechende Schichtdicken ergeben.

Bevorzugt werden der erste Abstand und die weiteren Abstände unterschiedlich groß gewählt und es ergeben sich damit unterschiedliche Schichtdicken.

Vorzugsweise ist das Ausgangsmaterial pastöses Wasserglas und der Aufbau des Formkörpers erfolgt auf einer Plattform, indem nacheinander Schichten aufgetragen und über die jeweils vorgegebene Querschnittsgeometrie verfestigt werden.

Vorteilhaft werden dem Wasserglas zusätzliche Lösungsmittel zugegeben, die die physikalischen Eigenschaften des dreidimensionalen Formkörpers beeinflussen.

Es ist von Vorteil, wenn der Formkörper nach dem Bauprozess noch einem zusätzlichen Verglasungsprozess in einer Wärmekammer unterzogen wird, um einen homogenen und isotropen Glaskörper zu erhalten.

Bevorzugt wird die fokussierte Energiestrahlung durch einen gepulsten Kurzpulslaser oder gepulsten Ultrakurzpulslaser erzeugt.

Mit dem erfindungsgemäßen Verfahren wird erstmals ein Verfahren zur additiven Herstellung von dreidimensionalen Bauteilen offenbart, das auf dem physikalischen Grundprinzip des Verdampfens bei gleichzeitiger Dehydratation durch Eintrag von Energiestrahlung basiert. Im Folgenden wird dieser komplexe Wechselwirkungsprozess durch den vereinfachten Begriff "Lösungsmittelentzug" ersetzt.

Als Material wird flüssiges oder pastöses Wasserglas verwendet, dass sehr schnell und definiert durch die Einwirkung der Energiestrahlung in den festen Zustand übergeht. Bevorzugt wird als Energiestrahlung Infrarot-Strahlung verwendet, weshalb die nachfolgende Beschreibung hiervon ausgeht.

Das Wasserglas wird schichtweise, selektiv mittels scannender oder projizierender IR-Laserstrahlung partiell erwärmt, sodass das Wasser verdampft und feste Kieselgele gebildet werden. In Abhängigkeit von der eingebrachten Wärmeenergie können die entstehenden Kieselgele zusätzlich an- bzw. aufgeschmolzen werden.

Um das flüssige Wasserglas schichtweise in den festen Zustand überführen zu können wird eine Plattform, die in einem Behälter mit flüssigem Wasserglas angeordnet ist, schichtweise abgesenkt. Zum Lösungsmittelentzug einer ersten Schicht wird die Plattform mit einem ersten Abstand zur Oberfläche des flüssigen Wasserglases positioniert und anschließend die erste Schicht partiell über eine durch die gewünschte geometrische Form des Formkörpers bestimmte Querschnittsgeometrie mit IR-Strahlung bestrahlt und somit verfestigt. Die Schichtdicken der jeweils weiteren Schichten werden jeweils nach dem schrittweisen Absenken der Plattform durch einen Abstand zwischen der jeweils zuvor verfestigten Schicht und der Oberfläche des flüssigen Wasserglases gebildet. Dabei können die weiteren Abstände gleich dem ersten Abstand sein oder aber jeweils einen anderen Wert aufweisen.

Um das pastöse Wasserglas schichtweise verfestigen zu können, wird analog zu aus dem Stand der Technik bekannten additiven Verfahren das Material schichtweise auf eine Plattform aufgetragen, wobei die einzelnen Schichten jeweils vor Auftrag der nächsten Schicht verfestigt werden.

Im Ergebnis können somit aus flüssigem oder aus pastösem Wasserglas Schicht für Schicht komplexe dreidimensionale Formköper mit amorpher, teilkristalliner oder kristalliner Struktur aufgebaut werden.

Als Wasserglas werden glasige Alkalisilikate, z. B. Natrium-, Kalium- und Lithiumsilikate, und deren wässrige Lösungen bezeichnet. Wassergläser können in flüssiger sowie fester, einschließlich hochviskoser (pastöser) Form vorliegen. Wasserglas wird durch das Aufschmelzen von Sand und Alkalicarbonaten hergestellt. Diese sind in kaltem Wasser praktisch unlöslich, können aber im Autoklaven unter Druck (4-5 bar) und Temperatur (140-150 °C) bis zur gewünschten Dichte und Viskosität gelöst werden. Durch die Trocknung des flüssigen Wasserglases durch einen Verdunstungsprozess wird wasserunlösliche Kieselsäure (Kieselgel) gebildet. Dieser Trocknungsprozess ist irreversibel [Büchel, K. H. et al. Industrielle anorganische Chemie. Weinheim_ WILEY-VCH Verlag GmbH, 1999].

Im Vergleich zu den Ausgangsmaterialien für bekannte additive Verfahren zum Aufbau nichtmetallischer anorganischer dreidimensionaler Bauteile ist Wasserglas ein sehr kostengünstiger Rohstoff und bedingt somit auch niedrige Herstellungskosten. Darüber hinaus ist Wasserglas ein Ausgangsmaterial, das auch über einen sehr langen Zeitraum seine Materialeigenschaften beibehält (keine Entmischung, keine Ablagerung, keine Alterung, UV-Beständigkeit, etc.).

Mit dem erfindungsgemäßen Verfahren können erstmals aus einem ausschließlich anorganischen, einphasigen und flüssigen oder pastösen Ausgangsmaterial amorphe, teilkristalline oder kristalline silikatische dreidimensionale Formkörper erzeugt werden, die die Vorteile der bekannten additiven Verfahren vereinen.

Insbesondere die Verfahrensdurchführung mit flüssigem Wasserglas weist eine Vielzahl von Vorteilen auf:
- Die Verwendung eines flüssigen Ausgangsstoffes erlaubt den Bau sehr komplexer und filigraner Strukturen sowie eine deutlich bessere Bauteilgenauigkeit, Konturtreue und Oberflächenqualität als beim Einsatz von Pulver- oder Stangenmaterial.
- Aufgrund des flüssigen einphasigen Ausgangsmediums können Formkörper mit geringer Porosität generiert werden.
- Da kein Zusatzmaterial erforderlich ist, wird kein Fremdmaterial in das Bauelement eingetragen, im Gegensatz zu 3D-Druckverfahren, die Binde- und Lösungs- bzw. Dispersionsmittel, meist organischer Natur, verwenden, die in einem zusätzlichen Prozessschritt soweit als möglich wieder aus dem Bauteil entfernt werden müssen.
- Das Generieren der Formkörper aus der Flüssigphase gestattet die Herstellung sehr spannungsarmer glasiger Körper, was bei allen anderen thermischen Verfahren nicht möglich ist.

Da die Tiefe der Wechselwirkung des Lösungsmittelentzuges eine Funktion der eingetragenen Energiestrahlung ist, können durch die Wahl der den Energieeintrag bestimmenden Prozessparameter im Aufbauprozess die Schichtdicken gezielt angepasst und variiert werden. Dies ist bei bisherigen additiven Verfahren ebenfalls nicht möglich.

Die Zeitkonstante für den Lösungsmittelentzug bzw. das Verfestigen von Materialvolumina ist sehr kurz. Damit kann der Prozess sehr dynamisch und somit sehr schnell erfolgen. Dies ist eine wesentliche Voraussetzung, um Formkörper mit komplexen Strukturen und hohen Genauigkeiten fertigen zu können.

Die Erfindung soll nachfolgend an zwei Ausführungsbeispielen anhand von Zeichnungen näher erläutert werden. Hierzu zeigen:
Fig. 1 eine Prinzipskizze für eine Vorrichtung zur Durchführung des Verfahrens mit flüssigem Wasserglas und
Fig. 2 eine Prinzipskizze für eine Vorrichtung zur Durchführung des Verfahrens mit pastösem Wasserglas.

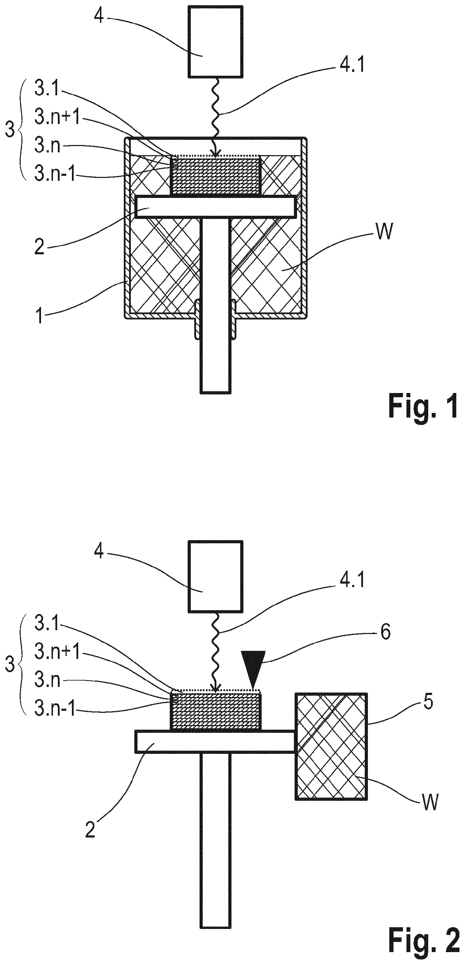

Besonders vorteilhaft ist die Ausführung des erfindungsgemäßen Verfahrens unter Verwendung von flüssigem Wasserglas W. Hierfür bedarf es, wie in Fig. 1 dargestellt, als technische Mittel einen Behälter 1 zur Aufnahme des flüssigen Wasserglases W und eine Plattform 2, auf der der Formkörper 3 in Schichten 3.n aufgebaut werden soll, indem diese für das Bauteilentformen nach Prozessende vertikal angehoben und während des Bauprozesses abgesenkt werden kann, sowie eine Strahleinrichtung 4 mit der Energiestrahlung 4.1, z. B. einer IR-Strahlung, welche auf die Oberfläche des flüssigen Wasserglases W gerichtet werden kann. Grundsätzlich kann die Energiestrahlung 4.1 statisch zur Oberfläche des flüssigen Wasserglases W ausgerichtet mit einem Strahlungsquerschnitt pro herzustellender Schicht 3.n auf die Oberfläche des Wasserglases W projiziert werden, der der Querschnittsgeometrie der jeweiligen Schicht 3.n des herzustellenden Formkörpers 3 entspricht. Hierfür bedarf es allerdings einer sehr hohen Energiestrahlung 4.1 und homogenen Energieverteilung über den Strahlungsquerschnitt, um einen über die Schicht 3.n lokal gleichmäßigen Lösungsmittelentzug zu erzielen, weshalb diese Art des Energieeintrages nur für kleine bis mittlere Formkörper 3 sinnvoll erscheint. Alternativ wird die jeweilige Querschnittsgeometrie der Schichten 3.n mit fokussierter Energiestrahlung 4.1 (Laserstrahl) gescannt, dabei kann der nötige Energieeintrag mit einer einmaligen oder vorteilhaft mit mehreren Wiederholungen der Scanbewegungen erfolgen. Um das Wasserglas W nur entsprechend der jeweiligen Querschnittsgeometrie der einzelnen Schichten 3.n zu verfestigen, wird bei einem Scannen zwischen festen Endlagen die Strahlquelle nur angeschaltet, wenn der Auftreffort des Laserstrahls innerhalb der jeweiligen Querschnittsgeometrie liegt, womit das Wasserglas W nur selektiv verfestigt wird.

Unabhängig davon, ob die Energiestrahlung 4.1 statisch (projiziert) oder dynamisch (scannend) auf die Oberfläche des flüssigen Wasserglases W gerichtet wird, werden in Abhängigkeit von den Prozessparametern, zu denen die Energiestrahlung 4.1 und die Dauer der Strahleinwirkung gehören, nacheinander die einzelnen Schicht 3.n verfestigt. Die Dicke einer jeden einzelnen Schicht 3.n wird bestimmt durch den Abstand der Plattform 2, für die erste Schicht 3.1, bzw. den Abstand der zuvor verfestigten Schicht 3.n-1 von der Oberfläche des flüssigen Wasserglases W, die auch die Fokusebene bzw. Wechselwirkungsstelle der Energiestrahlung 4.1 bildet. Nachdem eine Schicht 3.n verfestigt wurde, wird die Plattform 2 um einen Weg gleich der Schichtdicke der nächsten herzustellenden Schicht 3.n+1 abgesenkt. Die einzelnen Schichten 3.n gehen dabei jeweils eine stoffschlüssige Verbindung miteinander ein. Die Schritte des Einwirkens der Energiestrahlung 4.1, bis eine Schicht 3.n verfestigt ist, und des Absenkens der Plattform 2, bis sich oberhalb der Plattform 2 flüssiges Wasserglas W in einer Höhe gleich der Schichtdicke für die nächste Schicht 3.n befindet, werden so lange wiederholt, bis der Formkörper 3 vollständig aufgebaut ist.

Um die physikalischen Eigenschaften des Formkörpers 3 zu beeinflussen, wird dem Ausgangsmaterial vorteilhaft ein zusätzliches Lösungsmittel zugefügt, z. B. ein Farbstoff, um dem farblosen Wasserstoff eine Farbe zu geben.

Die Qualität des Formkörpers 3 lässt sich vorteilhaft verbessern, wenn er nach dem eigentlichen Bauprozess noch einem zusätzlichen Verglasungsprozess in einer Wärmekammer unterzogen wird.

Die fokussierte Energiestrahlung 4.1 kann mit einem kontinuierlich emittierenden Laser aber auch durch einen gepulsten Kurzpulslaser oder gepulsten Ultrakurzpulslaser erzeugt wird.

Nachfolgend werden die Prozessparameter für ein konkretes erstes Ausführungsbeispiel für die Herstellung eines Formkörpers 3 aus ca. 250 Schichten 3.n und einer Höhe von 50 mm aus flüssigem Natronwasserglas mit einer Viskosität im Bereich von 50-260 mPas angegeben. Die Strahleinrichtung 4 weist als Strahlungsquelle einen CO₂-Laser mit einer mittleren Laserleistung von 30 Watt auf. Des Weiteren weist die Strahleinrichtung 4 einen zweidimensionalen Scanner auf und ist so zum Behälter 1 angeordnet, dass die von der Strahlungsquelle abgegebene Energiestrahlung 4.1 in zwei zueinander orthogonale Scanrichtungen die Oberfläche des Wasserglases W abscannen kann. Die Energiestrahlung 4.1 wird auf die Oberfläche des flüssigen Wasserglases W bzw. in die zu verfestigende Schicht 3.n des Wasserglases W fokussiert, hier mit einem Fokusdurchmesser von 300 µm und mit einer Scangeschwindigkeit von 3,5 m/s über die Oberfläche des Wasserglases W geführt. Pro Schicht 3.n wird die Energiestrahlung 4.1 kreuzweise, zwei 90° zueinander versetzte Scanmuster (Kreuzschraffur) beschreibend, viermal gescannt, sodass jeder Ort der Schicht 3.n achtmal mit der Energiestrahlung 4.1 beaufschlagt wird und einen hierzu korrelierenden Energieeintrag erfährt. Mit den angegebenen Prozessparametern kann das flüssige Wasserglas W über eine Schicht 3.n mit einer Schichtdicke von ungefähr 200 µm verfestigt werden. Bei ansonsten unveränderten Prozessparametern können entsprechend mit mehr oder weniger Scans dickere oder dünnere Schichten 3.n verfestigt werden. Für dünnere Schichten 3.n ist es vorteilhaft, die Energiestrahlung 4.1 noch stärker zu fokussieren.

Anstatt mit flüssigem Wasserglas W kann das Verfahren mit hochviskosem, pastösem Wasserglas W durchgeführt werden, siehe Fig. 2. Die Materialzuführung erfolgt dabei aus einem Vorratsbehälter 5 und die Schichten 3.n werden jeweils mit einem Rakel oder einer Walze 6 auf eine Plattform 2 betreffend die erste Schicht 3.1 oder auf eine bereits verfestigte Schicht 3.n aufgetragen. Die Verfestigung der Schichten 3.n erfolgt analog der Verfestigung einer Schicht 3.n aus flüssigem Wasserglas W. Vorteilhaft ist die geringere notwendige Energiezufuhr, allerdings werden mit dem notwendigen Auftragen der einzelnen Schichten 3.n zum bloßen Absenken der Plattform 2 vergleichsweise aufwendigere Verfahrensschritte notwendig.

In Abwandlung zu dem vorangestellten konkreten ersten Ausführungsbeispiel wird gemäß einem zweiten konkreten Ausführungsbeispiel ein Formkörper 3 aus ca. 250 Schichten 3.n und einer Höhe von 50 mm aus pastösem Natronwasserglas mit einer Viskosität zwischen 2000 und 5000 mPas hergestellt. Die Laserleistung beträgt hier nur 15 Watt und die Scangeschwindigkeit ist mit 5 m/s höher als die des ersten konkreten Ausführungsbeispiels, was sich damit erklären lässt, dass weniger Wasser dem pastösen Material entzogen werden muss, um es auszutrocknen.

Grundsätzlich sind die Auswahl der Strahlungsquelle, der Ablauf des örtlichen und zeitlichen Eintrages der Energiestrahlung 4.1 und die Wahl der Prozessparameter eine Frage der Optimierung des Lösungsmittelentzuges abhängig vom Wassergehalt des Wasserglases W, der Schichtdicke und der Querschnittsgeometrie der jeweiligen Schichten 3.n.

### Bezugszeichenliste

- 1: Behälter (für flüssiges Wasserglas W)
- 2: Plattform
- 3: Formkörper
- 3.n: Schicht (des Formkörpers 3)
- 4: Strahleinrichtung
- 4.1: Energiestrahlung
- 5: Vorratsbehälter (für pastöses Wasserglas W)
- 6: Rakel oder Walze

- W: Wasserglas

## Patentansprüche

1. Verfahren zum dreidimensionalen additiven Aufbau eines Formkörpers (3), bei dem ein Ausgangsmaterial nacheinander in einem Bauprozess schichtweise verfestigt wird, wobei die dabei entstehenden Schichten (3.n) jeweils eine vorgegebene Querschnittsgeometrie aufweisen, **dadurch gekennzeichnet,**
**dass** als Ausgangsmaterial flüssiges oder pastöses Wasserglas (W) verwendet wird und die Verfestigung der Schichten (3.n) durch Lösungsmittelentzug über die Eintragung einer Energiestrahlung (4.1) erfolgt.

2. Verfahren nach Anspruch 1, **dadurch gekennzeichnet,**
**dass** die Energiestrahlung (4.1) eine Infrarot-Strahlung ist, die statisch zu einer Oberfläche des flüssigen Wasserglases (W) bzw. einer Oberfläche der zuletzt aufgetragenen Schicht des pastösen Wasserglases (W) ausgerichtet wird und mit einem Strahlungsquerschnitt pro herzustellender Schicht (3.n) auf die jeweilige Oberfläche projiziert wird, der jeweils der Querschnittsgeometrie der jeweiligen Schicht (3.n) des herzustellenden Formkörpers (3) entspricht.

3. Verfahren nach Anspruch 2, **dadurch gekennzeichnet,**
**dass** die Energiestrahlung (4.1) eine fokussierte Energiestrahlung (4.1) ist, die auf oder unter die jeweilige Oberfläche fokussiert wird, und die jeweilige Querschnittsgeometrie der jeweiligen Schichten (3.n) mit der fokussierten Energiestrahlung (4.1) gescannt wird.

4. Verfahren nach Anspruch 3, **dadurch gekennzeichnet,**
**dass** die fokussierte Energiestrahlung (4.1) eine Infrarot- oder Ultraviolett-Strahlung ist.

5. Verfahren nach Anspruch 3 oder 4, **dadurch gekennzeichnet,**
**dass** die jeweiligen Schichten (3.n) durch die fokussierte Energiestrahlung (4.1) mehrfach gescannt werden.

6. Verfahren nach Anspruch 1, **dadurch gekennzeichnet,**
**dass** das Ausgangsmaterial flüssiges Wasserglas (W) ist und der Aufbau des Formkörpers (3) auf einer Plattform (2) erfolgt, die in einem Behälter (1) angeordnet ist, der mit dem flüssigen Wasserglas (W) gefüllt ist, und die Plattform (2) schichtweise gegenüber einer Oberfläche des flüssigen Wasserglases (W) abgesenkt wird, wobei zum Lösungsmittelentzug einer ersten Schicht (3.1) die Plattform (2) mit einem ersten Abstand zur Oberfläche des flüssigen Wasserglases (W) positioniert wird und zum Lösungsmittelentzug der jeweils weiteren Schichten (3.n) jeweils nach einem Schritt des Absenkens der Plattform (2) die jeweils zuvor verfestigte Schicht (3.n-1) in einem weiteren Abstand zu der Oberfläche des flüssigen Wasserglases (W) angeordnet wird, wobei sich aus den jeweiligen Abständen für die jeweiligen Schichten (3.n) entsprechende Schichtdicken ergeben.

7. Verfahren nach Anspruch 6, **dadurch gekennzeichnet,**
**dass** der erste Abstand und die weiteren Abstände unterschiedlich groß gewählt werden und sich damit unterschiedliche Schichtdicken ergeben.

8. Verfahren nach Anspruch 1, **dadurch gekennzeichnet,**
**dass** das Ausgangsmaterial pastöses Wasserglas (W) ist und der Aufbau des Formkörpers (3) auf einer Plattform (2) erfolgt, indem nacheinander Schichten (3.n) aufgetragen und über die jeweils vorgegebene Querschnittsgeometrie verfestigt werden.

9. Verfahren nach Anspruch 1, **dadurch gekennzeichnet,**
**dass** dem Wasserglas (W) zusätzliche Lösungsmittel zugegeben werden, die die physikalischen Eigenschaften des dreidimensionalen Formkörpers (3) beeinflussen.

10. Verfahren nach Anspruch 1, **dadurch gekennzeichnet,**
**dass** der Formkörper (3) nach dem Bauprozess noch einem zusätzlichen Verglasungsprozess in einer Wärmekammer unterzogen wird, um einen homogenen und isotropen Glaskörper zu erhalten.

11. Verfahren nach Anspruch 1, **dadurch gekennzeichnet,**
**dass** die fokussierte Energiestrahlung (4.1) durch einen gepulsten Kurzpulslaser oder gepulsten Ultrakurzpulslaser erzeugt wird.

## Claims

1. A method for the three-dimensional additive construction of a moulded body (3), wherein a starting material is solidified successively in layers in a construction process, the layers (3.n) formed in the process each having a predetermined cross-sectional geometry, **characterised in that** liquid or pasty water glass (W) is used as the starting material and the solidification of the layers (3.n) is effected by solvent removal via the introduction of an energy radiation (4.1).

2. The method according to claim 1, **characterised in that** the energy radiation (4.1) is an infrared radiation which is statically aligned with a surface of the liquid water glass (W) or a surface of the last applied layer of the pasty water glass (W) and is projected onto the respective surface with a radiation cross-section per layer (3.n) to be produced which in each case corresponds to the cross-sectional geometry of the respective layer (3.n) of the moulded body (3) to be produced.

3. The method according to claim 2, **characterised in that** the energy radiation (4.1) is a focused energy radiation (4.1) which is focused onto or under the respective surface, and the respective cross-sectional geometry of the respective layers (3.n) is scanned by the focused energy radiation (4.1).

4. The method according to claim 3, **characterised in that** the focused energy radiation (4.1) is infrared or ultraviolet radiation.

5. The method according to claim 3 or 4, **characterised in that** the respective layers (3.n) are scanned several times by the focused energy radiation (4.1).

6. The method according to claim 1, **characterised in that** the starting material is liquid water glass (W) and the moulded body (3) is built up on a platform (2) which is arranged in a container (1) filled with the liquid water glass (W), and the platform (2) is lowered layer by layer with respect to a surface of the liquid water glass (W), the platform (2) being positioned at a first distance from the surface of the liquid water glass (W) for solvent removal from a first layer (3. 1), and for solvent removal from the respective further layers (3.n), in each case after a step of lowering the platform (2), the respective previously solidified layer (3.n-1) is arranged at a further distance from the surface of the liquid water glass (W), the respective distances resulting in corresponding layer thicknesses for the respective layers (3.n).

7. The method according to claim 6, **characterised in that** the first distance and the further distances are chosen to have different and thus result in different layer thicknesses.

8. The method according to claim 1, **characterised in that** the starting material is pasty water glass (W) and the moulded body (3) is built up on a platform (2) by successively applying layers (3.n) and solidifying them over the respective predetermined cross-sectional geometry.

9. The method according to claim 1, **characterised in that** that additional solvents are added to the water glass (W) which influence the physical properties of the three-dimensional moulded body (3).

10. The method according to claim 1, **characterised in that** the moulded body (3) is subjected to an additional vitrification process in a heat chamber after the construction process in order to obtain a homogeneous and isotropic glass body.

11. The method according to claim 1, **characterised in that** the focused energy radiation (4.1) is generated by a pulsed short-pulse laser or pulsed ultrashort-pulse laser.

## Revendications

1. Procédé de fabrication additive tridimensionnelle d'un corps façonné (3), dans lequel un matériau de départ est solidifié successivement en couches dans un processus de construction, les couches (3.n) formées dans le processus présentant chacune une géométrie de section transversale prédéterminée, **caractérisé en ce que** du verre soluble (W) liquide ou pâteux est utilisé comme matériau de départ et la solidification des couches (3.n) est effectuée en éliminant le solvant par introduction d'un rayonnement énergétique (4.1).

2. Procédé selon la revendication 1, **caractérisé en ce que** le rayonnement énergétique (4.1) est un rayonnement infrarouge qui est orienté statiquement par rapport à une surface du verre soluble (W) ou une surface de la dernière couche appliquée du verre soluble pâteux (W) et qui est projeté sur la surface respective avec une section transversale de rayonnement par couche (3.n) à produire qui correspond à chaque fois à la géométrie de la section transversale de la couche respective (3.n) du corps façonné (3) à produire.

3. Procédé selon la revendication 2, **caractérisé en ce que** le rayonnement énergétique (4.1) est un rayonnement énergétique focalisé (4.1) qui est focalisé sur ou sous la surface respective, et la géométrie de section transversale respective des couches respectives (3.n) est balayée par le rayonnement énergétique focalisé (4.1).

4. Procédé selon la revendication 3, **caractérisé en ce que** le rayonnement énergétique focalisé (4.1) est un rayonnement infrarouge ou ultraviolet.

5. Procédé selon la revendication 3 ou 4, **caractérisé en ce que** les couches respectives (3.n) sont balayées plusieurs fois par le rayonnement énergétique focalisé (4.1).

6. Procédé selon la revendication 1, **caractérisé en ce que** le matériau de départ est du verre soluble (W) et le corps façonné (3) est construit sur une plateforme (2) qui est disposée dans un récipient (1) qui est rempli du verre soluble (W), et la plateforme (2) est abaissée couche par couche par rapport à une surface du verre soluble (W), la plateforme (2) étant positionnée à une première distance de la surface du verre soluble (W) afin d'éliminer le solvant d'une première couche (3.1), et pour l'élimination du solvant des autres couches respectives (3.n), dans chaque cas après une étape d'abaissement de la plateforme (2), la couche respective précédemment solidifiée (3.n-1) est disposée à une autre distance de la surface du verre soluble (W), les distances respectives résultant en des épaisseurs de couche correspondantes pour les couches respectives (3.n).

7. Procédé selon la revendication 6, **caractérisé en ce que** la première distance et les autres distances sont choisies différemment et donnent donc des épaisseurs de couche différentes.

8. Procédé selon la revendication 1, **caractérisé en ce que** le matériau de départ est du verre soluble pâteux (W) et que le corps façonné (3) est construit sur une plateforme (2) en appliquant successivement des couches (3.n) et en les solidifiant sur la géométrie de section transversale prédéterminée respective.

9. Procédé selon la revendication 1, **caractérisé en ce que** des solvants supplémentaires sont ajoutés au verre soluble (W), qui influencent les propriétés physiques du corps façonné tridimensionnel (3).

10. Procédé selon la revendication 1, **caractérisé en ce que** le corps façonné (3) est soumis à un processus de vitrification supplémentaire dans une chambre thermique après le processus de construction afin d'obtenir un corps en verre homogène et isotrope.

11. Procédé selon la revendication 1, **caractérisé en ce que** le rayonnement énergétique focalisé (4.1) est généré par un laser pulsé à impulsions courtes ou un laser pulsé à impulsions ultra-courtes.
